# EUROPÄISCHE PATENTANMELDUNG

(11) **EP 2 436 923 A1**
(43) Veröffentlichungstag der Anmeldung: **04.04.2012**
(21) Anmeldenummer: 11178445.0
(22) Anmeldetag: 23.08.2011
(51) Int. Cl.: F03D 11/00, F16H 57/04

(54) **Vorrichtung zur Filterung von Schmierstoffen eines Windturbinengetriebes**

(30) Priorität: 30.09.2010 DE 102010041750
(71) Anmelder: SIEMENS AKTIENGESELLSCHAFT, 80333 München (DE)
(72) Erfinder: Brasseur, Michaela, 52072 Aachen (DE); Wohlleb, Matthias, 52146 Würselen (DE)

(57) **Zusammenfassung**

Vorrichtung zur Filterung von Schmierstoffen eines Windturbinengetriebes umfasst einen Schmierstoffeinlass (1) und einen Schmierstoffauslass (2). Schmierstoffe des Windturbinengetriebes werden vom Schmierstoffeinlass zum Schmierstoffauslass geführt.

Die Vorrichtung umfasst weiterhin ein Filterelement (3), das zwischen dem Schmierstoffeinlass und dem Schmierstoffauslass angeordnet ist. Das Filterelement ist derart ausgebildet, dass durch das Filterelement Wasser aus den Schmierstoffen abgeschieden wird.

Ein Wasserauslass (4) ist mit dem Filterelement verbunden und zwar derart, dass das abgeschiedene Wasser aus der Vorrichtung abführbar ist.

Zwischen dem Filterelement (3) und dem Wasserauslass (4) ist ein Kohlenwasserstoffadsorber (6) derart angeordnet, dass er das abgeschiedene Wasser von Kohlenwasserstoffen reinigt.

## Beschreibung

Die vorliegende Erfindung betrifft eine Vorrichtung zur Filterung von Schmierstoffen eines Windturbinengetriebes, eine Windturbine mit einer solchen Vorrichtung und ein Verfahren zur Filterung von Schmierstoffen eines Windturbinengetriebes.

Windturbinengetriebe sind einer Belastung durch Wasser ausgesetzt. Das Wasser kann sowohl das Getriebe als auch die Schmierstoffe angreifen.

Wasser kommt im Getriebe in Form von so genanntem "freien Wasser", in gelöster Form oder als Teil einer Emulsion vor. Beim Aufspalten von Wasser durch Elektrolyse wird Wasserstoff freigesetzt. Rissausbreitung und Brüche im Material können die Folge sein. Außerdem führen sowohl freies als auch gelöstes Wasser zu einem erhöhten aggressiven Säurepotenzial und somit zu Korrosion und Lochfraß an den Oberflächen. Das Abtragen von Eisenoxiden kann ebenfalls zu Bruchbildung führen.

Außerdem wirkt sich Wasser negativ auf die Eigenschaften der Getriebeschmierstoffe aus. So kann Getriebeöl in Gegenwart von Sauerstoff auf Grund der erhöhten Temperaturen oxidieren. Wenn Wasser und Metallpartikel, z.B. Abrieb, im Schmieröl vorhanden sind, dann verbrauchen sich Antioxidationsmittel schneller und das führt wiederum zu Korrosion an den Metalloberflächen. Außerdem kann es zu Schlamm- und Filmbildung sowie zu einem ungleichmäßigen Ölfluß kommen.

Da Wasser auch den Nutzeffekt anderer Additive vermindert, wird auch die Bildung von Säure und Schlamm auf dem Ölsumpfboden begünstigt. Zudem kann es zu weiteren technischen Problemen kommen, wie Schaumbildung oder mikrobiellen Verunreinigungen im Öl, ebenso zu einer eingeschränkten Festigkeit des Ölfilms oder einer Viskositätsänderung des Öls.

Die Lebensdauer des Getriebes einer Windturbine hängt somit stark vom relativen Wasseranteil im Getriebeöl ab.

Aus diesem Grund werden Filtersysteme zur Filterung des Getriebeöls in Windturbinen eingesetzt, die das Öl von Partikeln, Schmutzfilmen und auch von Wasser befreien. Diese bekannten Filtersysteme verwenden extrem saugfähige Filtermaterialien. Beim Durchfluss des Öls werden Partikel im Filtermaterial zurückgehalten und Wasseranteile gebunden.

Nachteilig hieran ist, dass die Poren des Filtermaterials sich mit der Zeit zusetzen. Das Filtermaterial muss deshalb regelmäßig durch neues Filtermaterial ersetzt werden, um die Funktionstüchtigkeit des Filtersystems garantieren zu können.

Der Wechsel des Filtermaterials ist dabei aufwendig und teuer, insbesondere bei Meereswindkraftanlagen, die schwer zugänglich sind.

Der vorliegenden Erfindung liegt daher die Aufgabe zugrunde, eine verbesserte Vorrichtung zur Filterung von Schmierstoffen eines Windturbinengetriebes vorzuschlagen, bei der das Zusetzen des Filtermaterials durch Wasseranteile im Vergleich zu bekannten Filtervorrichtungen dieser Art verringert wird.

Erfindungsgemäß wird diese Aufgabe gelöst durch die Vorrichtung gemäß Anspruch 1. Vorteilhafte Weiterbildungen der Erfindung sind in den Unteransprüchen definiert.

Die erfindungsgemäße Vorrichtung zur Filterung von Schmierstoffen eines Windturbinengetriebes umfasst einen Schmierstoffeinlass und einen Schmierstoffauslass. Schmierstoffe des Windturbinengetriebes werden vom Schmierstoffeinlass zum Schmierstoffauslass geführt.

Die Vorrichtung umfasst weiterhin ein Filterelement, das zwischen dem Schmierstoffeinlass und dem Schmierstoffauslass angeordnet ist. Das Filterelement ist derart ausgebildet, dass durch das Filterelement Wasser aus den Schmierstoffen abgeschieden wird.

Ein Wasserauslass ist mit dem Filterelement verbunden und zwar derart, dass das abgeschiedene Wasser aus der Vorrichtung abführbar ist.

Zwischen dem Filterelement und dem Wasserauslass ist ein Kohlenwasserstoffadsorber derart angeordnet ist, dass er das abgeschiedene Wasser von Kohlenwasserstoffen reinigt.

Das zur Wasserabscheidung vom Schmierstoff verwendete Filterelement gibt das abgeschiedene Wasser ab. Zudem werden im Wasser mitgeführte Schmierstoffanteile herausgefiltert, so dass das Wasser automatisch abgelassen werden kann.

Das ermöglicht größere Filterwechselintervalle. Zudem sind die Wartungskosten für den Kohlenwasserstoffadsorber niedrig, da der Adsorber regenerierbar ist und das Adsorbermaterial selbst einen niedrigen Preis hat.

Eine Ausführungsform der Erfindung umfasst mindestens eine Messeinrichtung zur Erfassung des Kohlenwasserstoffgehalts im Wasser und mindestens ein steuerbares Auslassventil. Dadurch ist sichergestellt, dass nur gereinigtes Wasser aus der Vorrichtung abgelassen wird.

Ausführungsformen der Erfindung werden in exemplarischer Weise mit Bezug auf die angehängten Zeichnungen beschrieben, in denen:
FIG 1: schematisch eine erste Ausführungsform der erfindungsgemäßen Vorrichtung,
FIG 2: schematisch eine zweite Ausführungsform der erfindungsgemäßen Vorrichtung, und
FIG 3: schematisch eine dritte Ausführungsform der erfindungsgemäßen Vorrichtung zeigt.

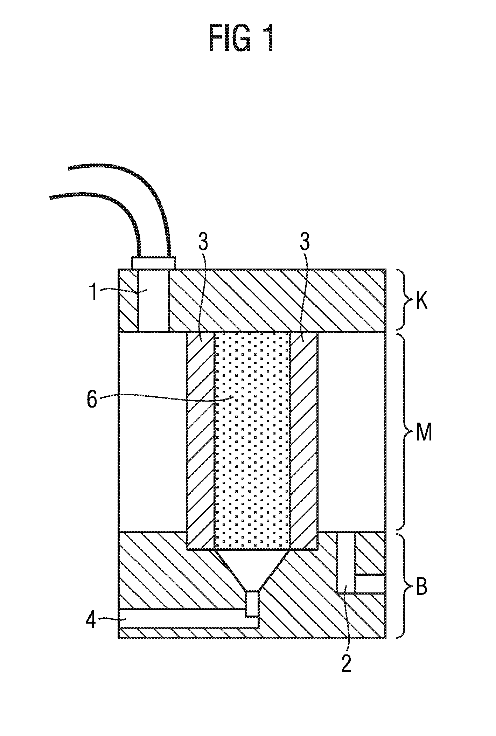

Wie in **FIG 1** gezeigt, weist die erfindungsgemäße Vorrichtung einen Schmierstoffeinlass (1), z.B. für Getriebeöl, auf. Über einen Öl-Einlassstutzen oder -krümmer (1) gelangt das zu filternde Getriebeöl in die Vorrichtung und wird durch die Vorrichtung zum Öl-Auslass (2) geführt, der sich stromab am unteren Ende der Vorrichtung befindet.

Das Getriebeöl wird bevorzugt von einer Pumpe druckbeaufschlagt durch die Filtervorrichtung geführt, kann aber alternativ auf Grund der Anordnung von Öl-Einlass (1) und Öl-Auslass (2) zueinander auch drucklos allein durch die Schwerkraft die Vorrichtung durchströmen.

Ein Filterelement (3) ist zwischen dem Öl-Einlass (1) und dem Öl-Auslass (2) angeordnet. Das Filterelement (3) ist zum Abscheiden von Wasser aus Getriebeöl oder anderen Schmierstoffen ausgebildet. Dazu weist das Filterelement (3) ein hydrophobes Fasergeflecht und/oder ein hydrophobes netzartiges Material auf.

Das Filterelement (3) ist zylinderförmig ausgebildet und derart im Filtergehäuse angeordnet, dass seine Mantelfläche von dem Schmierstoff umspült wird.

In der in FIG 1 gezeigten Ausführungsform der Erfindung ist das Filterelement (3) als Hohlzylinder ausgebildet, so dass es in seinem Zentrum eine Kammer aufweist, in die das abgeschiedene Wasser gelangt.

Das Filterelement (3) ist mit einem Wasserauslass (4) verbunden und zwar auf seiner dem Öl abgewandten Seite. Vom Öl abgeschiedenes Wasser wird über den Wasserauslass (4) aus der Vorrichtung abgeführt.

Das aus dem Getriebeöl abgeschiedene Wasser wird somit nicht, wie in bekannten Filtervorrichtungen für Windturbinengetriebe, vom Filtermaterial gebunden, sondern abgegeben. Dadurch hat das Filterelement (3) eine längere Lebensdauer.

Das vom Getriebeöl abgeschiedene Wasser weist üblicherweise geringe Mengen an mitgeführtem Getriebeöl auf und wird deshalb in der erfindungsgemäßen Vorrichtung gereinigt. Dazu ist zwischen dem Filterelement (3) und dem Wasserauslass (4) ein Kohlenwasserstoffadsorber (6) vorgesehen.

Der Kohlenwasserstoffadsorber (6) ist so angeordnet, dass das abgeschiedene Wasser auf seinem Weg zum Wasserauslass (4) den Adsorber passiert. Der Kohlenwasserstoffadsorber (6) selbst weist ein hydrophobes Adsorbens auf, bevorzugt Aktivkohle.

Aktivkohle, auch als aktivierter Kohlenstoff bezeichnet, hat eine sehr große Oberfläche im Vergleich zu ihrem Gewicht. Durch ihre hochporöse Struktur kann sie Verunreinigungen aus flüssigen oder gasförmigen Materialien abscheiden.

Beim Durchfluss des Wassers durch die Aktivkohle werden Kohlenwasserstoffanteile von der inneren Oberfläche des Filters adsorbiert. Das Wasser wird chemisch nicht gebunden und wieder abgegeben. Es kann gesammelt und abgeführt werden.

Alternativ können Kohlenstoffmolekularsiebe als Adsorbermaterial verwendet werden.

Ein gesättigter Kohlenwasserstoffadsorber (6) wird durch Energiezufuhr, beispielsweise Temperatur- oder Druckänderungen, von den anhaftenden Kohlenwasserstoffen befreit, d.h. regeneriert, und ist wiederverwendbar.

In der in FIG 1 gezeigten Ausführungsform, ist das Filterelement (3) in Form eines Hohlzylinders ausgebildet und der Kohlenwasserstoffadsorber (6) ist im Inneren dieses Hohlzylinders angeordnet. Dabei hat der Kohlenwasserstoffadsorber (6) die Form eines Vollzylinders. Die Mantelfläche des zylinderförmigen Adsorbers ist flächig mit dem Filterelement (3) verbunden.

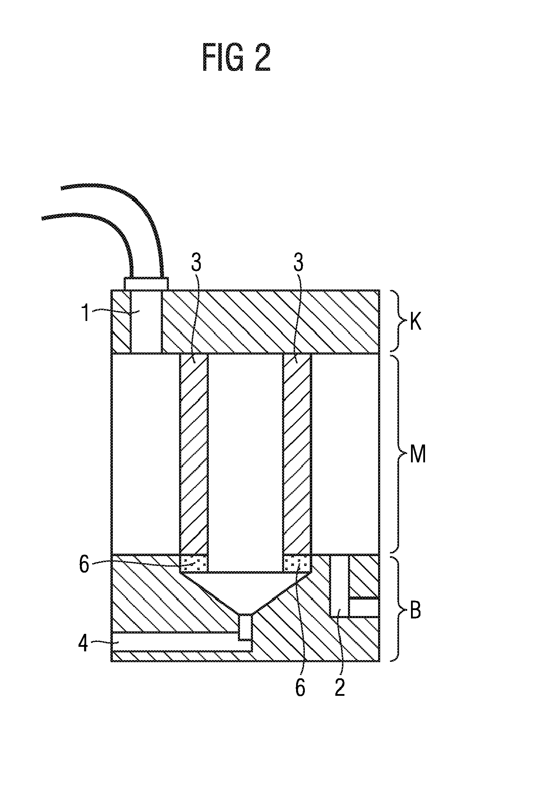

In einer weiteren, in **FIG 2** gezeigten Ausführungsform ist der Kohlenwasserstoffadsorber (6) unterhalb des Filterelements (3) angeordnet. Er hat dabei die Form eines Hohlzylinders, könnte aber ebenso als Vollzylinders ausgebildet sein. Alternativ kann er in Form eines Kegels oder eines Kegelstumpfes in einem trichterförmigen Wasserauffangbereich (5) angeordnet sein. Stromab des Kohlenwasserstoffadsorbers (6) befindet sich der Wasserauslass (4).

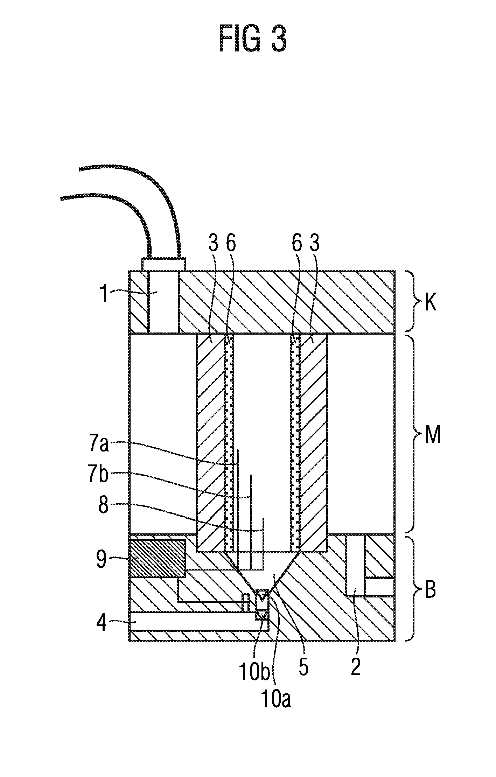

**FIG 3** zeigt eine Ausführungsform der Erfindung mit einem Kohlenwasserstoffadsorber (6) in Form eines Hohlzylinders, der im Inneren des Filterelements (3) angeordnet ist.

Die in FIG 3 gezeigte Ausführungsform der Erfindung umfasst weiterhin zwei Kohlenwasserstoff-Sensoren (7a,7b) zur Messung des Kohlenwasserstoff-Gehalts des abgeschiedenen Wassers. In Abhängigkeit von dem von den Sensoren (7a,7b) gemessenen Kohlenwasserstoffgehalt können ein oder mehrere Auslassventile gesteuert werden. Ebenso können zwei Auslassventile unabhängig voneinander geöffnet und/oder geschlossen werden, um sicherzustellen, dass das abgeschiedene Wasser nur solange abgeführt wird, wie sein Kohlenwasserstoffgehalt einen vorbestimmten Messwert unterschreitet.

Darüber hinaus kann ein Temperatursensor (8) zur Messung der Temperatur des abgeschiedenen Wassers vorgesehen sein.

Bei dieser Ausführungsform weist das Filterelement (3), durch seine Form bedingt, im Inneren eine Kammer auf. Die Kammer ist mit dem Wasserauslass (4) gekoppelt, so dass abgeschiedenes Wasser aus der Kammer abgeführt werden kann. Eine oder mehrere Messeinrichtungen (7a,7b,8) sind dabei in der Kammer oder stromab in Richtung des Wasserflusses unterhalb der Kammer oder unterhalb des Kohlenwasserstoffadsorbers (6) angeordnet. Das abgeschiedene Wasser tropft in die Kammer oder wird in die Kammer hinein und aus der Kammer heraus gesaugt.

Der Wasserauslass (4) umfasst mindestens ein Auslassventil (10a,10b), dass bevorzugt als Magnetventil ausgebildet ist. Zwischen dem Filterelement (3) und dem mindestens einen Auslassventil (10a,10b) ist ein Ablasskanal angeordnet, der einen Wasserauffangbereich (5) für abgeschiedenes Wasser umfasst.

Wie bereits erwähnt, können zwischen Filterelement (3) und Wasserauslass (4) zwei Auslassventile (10a,10b) angeordnet sein, die unabhängig voneinander geöffnet und/oder geschlossen werden können. Eine solche Variante der Erfindung ist in FIG 3 dargestellt.

Die beiden Auslassventile (10a,10b) werden dabei so betrieben, dass zunächst das Messergebnis eines ersten Sensors (7a) ausgewertet wird. Liegt der Kohlenwasserstoffgehalt unterhalb eines Grenzwerts, dann wird das in Flussrichtung des Wassers erste Auslassventil (10a) geöffnet. Anschließend wird das Messergebnis eines zweiten Kohlenwasserstoffsensors ausgewertet. Erst wenn auch dieses Ergebnis eine vorbestimmte Grenze nicht überschreitet, wird das in Flussrichtung des Wassers zweite Auslassventil (10b) geöffnet und das Wasser passiert den Wasserauslass (4).

Wie ebenfalls in FIG 3 gezeigt, weist die Vorrichtung eine Steuereinrichtung (9) auf. Die Steuereinrichtung (9) ist mit zumindest einer Messeinrichtung (7a,7b,8) und/oder zumindest einem Auslassventil (10a,10b) derart verbunden ist, dass der Zeitpunkt des Ablassens des abgeschiedenen Wassers in Abhängigkeit von den Messwerten der Messeinrichtung (7a,7b,8) steuerbar ist. Eine maximal zugelassene Konzentration an Kohlenwasserstoffen, beispielsweise 2 ppm, ist über die Steuereinrichtung (9) vorgebbar.

Darüber hinaus weist die Steuereinrichtung (9) eine DatenSchnittstelle bzw. ein Mensch-Maschine-Interface zur lokalen Überwachung und/oder zur Fernwartung der Vorrichtung auf. So kann ein entsprechender Wartungshinweis sichtbar gemacht oder ein entsprechendes Signal an eine Zentrale übertragen werden.

Die Vorrichtung besteht aus drei Segmenten (K,M,B). Der Schmierstoffeinlass (1) ist in einem Kopfsegment (K) angeordnet. Ein Mittelsegment (M) umfasst einen Schmierstoffbehälter mit dem darin angeordneten Filterelement (3). Die Steuereinrichtung (9), zumindest eine Meßeinrichtung (7a,7b,8) und der Wasserauslass (4) sind in einem Bodensegment (B) angeordnet. Dabei ist die Nähe von Steuereinheit (9) und Meßeinrichtung bzw. Meßeinrichtungen (7a,7b,8) vorteilhaft.

In Bezug auf eine vertikale Achse ist das Kopfsegment oben, das Mittelsegment in der Mitte und das Bodensegment unten angeordnet.

In einer anderen Ausführungsform der Erfindung umfasst das Kopfsegment ein zusätzliches Filterelement, dass Partikel aus dem Schmierstoff filtert. Das zusätzliche Filterelement ist so ausgeführt und angeordnet, dass es auf einfache Weise ausgewechselt werden kann.

Alternativ kann ein solches Filterelement zur Partikelabscheidung auch als separater Filter der erfindungsgemäßen Vorrichtung vorgeschaltet sein. Ebenso kann ein Filterelement zur Partikelabscheidung als weitere Filterschicht außen um das Filterelement (3) zur Wasserabscheidung herum angeordnet und sein. Das Filterelement zur Partikelabscheidung ist auch bei der zuletzt erwähnten Variante dem Filterelement (3) zur Wasserabscheidung vorgeschaltet.

In einer weiteren Ausführungsform der Erfindung ist die erfindungsgemäße Vorrichtung Teil eines Windturbinengetriebes, wobei der Ölauslass (2) der Vorrichtung mit dem Getriebe verbunden ist.

Die Erfindung umfasst weiterhin ein Verfahren zur Filterung von Schmierstoffen eines Windturbinengetriebes, bei dem mit einem Filterelement (3) Wasser aus Schmierstoffen des Windturbinengetriebes abgeschieden wird und bei dem mit einem Kohlenwasserstoffadsorber (6) das abgeschiedene Wasser von Kohlenwasserstoffen gereinigt wird.

Das Abführen des gereinigten Wassers aus der Vorrichtung erfolgt bevorzugt in Abhängigkeit vom Kohlenwasserstoffgehalt und/oder der Temperatur des abgeschiedenen Wassers.

Alle in der obigen Beschreibung und in den nachfolgenden Ansprüchen dargestellten Merkmale können sowohl allein als auch in beliebiger Form miteinander kombiniert erfindungswesentlich sein.

## Patentansprüche

1. Vorrichtung zur Filterung von Schmierstoffen eines Windturbinengetriebes
- mit einen Schmierstoffeinlass (1) und einem Schmierstoffauslass (2), wobei Schmierstoffe des Windturbinengetriebes vom Schmierstoffeinlass (1) zum Schmierstoffauslass (2) geführt werden,
- mit einem Filterelement (3), das zwischen dem Schmierstoffeinlass (1) und dem Schmierstoffauslass (2) angeordnet und derart ausgebildet ist, dass durch das Filterelement (3) Wasser aus den Schmierstoffen abgeschieden wird,
- bei der ein Wasserauslass (4) derart mit dem Filterelement verbunden ist, dass das abgeschiedene Wasser aus der Vorrichtung abführbar ist, und
- bei der zwischen dem Filterelement (3) und dem Wasserauslass (4) ein Kohlenwasserstoffadsorber (6) derart angeordnet ist, dass er das abgeschiedene Wasser von Kohlenwasserstoffen reinigt.

2. Vorrichtung nach Anspruch 1, bei der das Filterelement (3) als Hohlzylinder ausgebildet und derart im Filtergehäuse angeordnet ist, dass seine Mantelfläche von dem Schmierstoff umspült wird.

3. Vorrichtung nach Anspruch 1 oder 2, bei der das Filterelement (3) ein hydrophobes Fasergeflecht oder ein Netz aufweist.

4. Vorrichtung nach einem der Ansprüche 1 bis 3, bei der der Kohlenwasserstoffadsorber (6) in Form eines Zylinders oder Hohlzylinders ausgebildet und dem Filterelement (3) nachgeordnet bzw. nachgeschaltet ist.

5. Vorrichtung nach einem der Ansprüche 1 bis 4, bei der der Kohlenwasserstoffadsorber (6) ein hydrophobes Adsorbens, insbesondere Aktivkohle oder Kohlenstoffmolekularsiebe, aufweist oder aus einem hydrophoben Adsorbens besteht.

6. Vorrichtung nach einem der Ansprüche 1 bis 5, bei der eine Messeinrichtung (7a,7b) zur Messung des Kohlenwasserstoffgehalts des abgeschiedenen Wassers und/oder eine Messeinrichtung (8) zur Messung der Temperatur des abgeschiedenen Wassers vorgesehen ist.

7. Vorrichtung nach einem der Ansprüche 1 bis 6, bei der das Filterelement (3) eine Kammer aufweist, die mit einem Auslassventil gekoppelt ist, so dass aus dem Schmierstoff abgeschiedenes Wasser aus der Kammer über das Auslassventil (10a,10b) abgeführt wird.

8. Vorrichtung nach einem der Ansprüche 1 bis 7, bei der zwischen Filterelement (3) und Wasserauslass (4) ein Ablasskanal mit mindestens einem Auslassventil (10a,10b), insbesondere einem Magnetventil, angeordnet ist.

9. Vorrichtung nach Anspruch 8, bei der zwischen Filterelement (3) und Wasserauslass (4) ein Ablasskanal mit zwei Auslassventilen (10a,10b), insbesondere Magnetventilen, angeordnet ist, die unabhängig voneinander geöffnet und/oder geschlossen werden können.

10. Vorrichtung nach einem der Ansprüche 1 bis 9, bei der eine Steuereinrichtung (9) mit zumindest einer Messeinrichtung (7a,7b,8) und/oder zumindest einem Auslassventil (10a,10b) derart verbunden ist, dass der Zeitpunkt des Ablassens des abgeschiedenen Wassers in Abhängigkeit von den Messwerten der Messeinrichtung (7a,7b,8) steuerbar ist.

11. Vorrichtung nach einem der Ansprüche 1 bis 10, bei der die Steuereinrichtung (9) eine Mensch-Maschine-Schnittstelle zur lokalen Überwachung und/oder zur Fernwartung der Vorrichtung aufweist.

12. Vorrichtung nach einem der Ansprüche 1 bis 11, bei der der Schmierstoffeinlass (1) derart zum Schmierstoffauslass (2) angeordnet ist, dass der Schmierstoff drucklos durch die Schwerkraft und/oder druckbeaufschlagt durch eine Pumpe vom Schmierstoffeinlass (1) zum Schmierstoffauslass (2) geführt wird.

13. Vorrichtung nach einem der Ansprüche 1 bis 12, bei der die Vorrichtung aus drei Segmenten (K,M,B) besteht,
wobei der Schmierstoffeinlass (1) in einem Kopfsegment (K) angeordnet ist,
wobei ein Schmierstoffbehälter mit dem darin angeordneten Filterelement (3) in einem Mittelsegment (M) angeordnet ist und
wobei die Steuereinrichtung (9), zumindest eine Meßeinrichtung (7a,7b,8) und der Wasserauslass (4) in einem Bodensegment (B) angeordnet sind,
wobei in Bezug auf eine vertikale Achse das Kopfsegment oben, das Mittelsegment in der Mitte und das Bodensegment unten angeordnet ist.

14. Windturbinengetriebe, die eine Vorrichtung nach einem der vorhergehenden Ansprüche beinhaltet oder mit einer Vorrichtung nach einem der vorhergehenden Ansprüche verbunden ist.

15. Verfahren zur Filterung von Schmierstoffen eines Windturbinengetriebes
- bei dem mit einem Filterelement (3) Wasser aus Schmierstoffen des Windturbinengetriebes abgeschieden wird, und
- bei dem mit einem Kohlenwasserstoffadsorber (6) das abgeschiedene Wasser von Kohlenwasserstoffen gereinigt wird.
